# EUROPEAN PATENT APPLICATION

(11) **EP 4 428 795 A1**
(43) Date of publication of application: **11.09.2024**
(21) Application number: 21963373.2
(22) Date of filing: 04.11.2021
(51) Int. Cl.: G06Q 30/0601, G06Q 20/36, G06Q 20/38, H04N 21/254, H04N 21/478, H04N 21/4185, H04L 9/08

(54) **TELEVISION (TV) PLATFORM LINKED WITH NON FUNGIBLE TOKEN (NFT) MARKET, AND METHOD FOR CONTROLLING TV PLATFORM**

(71) Applicant: LG Electronics Inc., Yeongdeungpo-gu Seoul 07336 (KR)
(72) Inventor: HA, Changsu, Seoul 06772 (KR)
(74) Representative: Vossius & Partner Patentanwälte Rechtsanwälte mbB
(86) International application number: PCT/KR2021/015927
(87) International publication number: WO 2023/080273

(57) **Abstract**

The present invention is characterized by comprising: an output unit including a display unit and a sound output unit; a communication unit for establishing a communication connection with an NFT market server; memory including a cryptocurrency wallet; and a control unit which accesses the NFT market server on the basis of key information stored in the cryptocurrency wallet, receives and displays preview artwork data corresponding to at least one piece of digital artwork, and when a selection is made by a user, generates a purchase transaction on the basis of the key information stored in the cryptocurrency wallet, and receives, from the NFT market server, NFT status information of digital artwork corresponding to the selected preview artwork and having updated transaction details.

## Description

### Technical Field

The present disclosure relates to a television (TV) platform including a display unit configured to display image information, and more particularly, to a TV platform linked with a nun-fungible token (NFT) market to allow to purchase digital artwork.

### Background Art

Generally, a TV may refer to a device that receives and displays broadcast content through radio waves, or receives and outputs image information and sound information. As functions of the TV are diversifying, the TV is implemented in the form of a multimedia device (a multimedia player) with complex functions such as output of images or videos stored in other media, or provision of games, etc. in addition to a function of playing content received through broadcasting.

Further, with recent advances in TV-related technology, a method of displaying an image using a self-emissive device such as a light-emitting diode (LED) and an organic light-emitting diode (OLED) has been developed, thereby enabling to output an image with an image resolution and a contrast ratio of full high definition (HD) content or higher. In addition, a technology such as a nanocell, a quantum dot, etc. has been adopted to obtain bright and clear image quality, detail contrast expression, and accurate and rich color representation, and as wide screens are provided and color distortion are prevented, TVs with a wide viewing angle are emerging.

Meanwhile, as TV devices provide excellent image quality, a wide screen, and a wide viewing angle, various research is being actively conducted to use such TV devices to display digital artwork.

Moreover, as communication technology is advanced, the TV devices are being developed as a comprehensive audiovisual platform, i.e., a TV platform connected to a server or other devices through a network to be capable of controlling and managing image information or sound information output from TVs through the connected network to provide services such as a video on demand (VOD) service, as well as providing a function of simply receiving and playing images, videos, or broadcasting signals. Thus, research is being briskly conducted on a method by which a user may utilize the TV platform not only to display digital artwork, but also to purchase desired digital artwork.

### Disclosure of Invention

### Technical Problem

Therefore, to obviate those problems, an aspect of the detailed description is to provide a television (TV) platform and a method of controlling the same so that digital artwork provided through a network may be displayed using the TV platform and a user may purchase the digital artwork displayed through the TV platform when desired by the user.

In addition, an aspect of the detailed description is to provide a TV platform and a method of controlling the same such that a user may purchase digital artwork displayed on the TV platform through a non-fungible toke (NFT) market in which ownership of the digital artwork may be purchased, by linking the TV platform with the NFT market.

### Technical Solution

To achieve these and other advantages and in accordance with the purpose of the present disclosure, as embodied and broadly described herein, there is provided a television (TV) platform including: an output unit including a display unit and an audio output unit; a communication unit configured to establish a communication connection with a non-fungible token (NFT) market server; a memory including a cryptocurrency wallet containing at least one piece of key information related to a cryptocurrency account of a user; and a control unit configured to: access the NFT market server by generating a login signature according to the at least one piece of key information stored in the cryptocurrency wallet according to a request by a user, receive data of pieces of preview artwork corresponding to at least one piece of digital artwork provided by the NFT market server, respectively, and output the pieces of preview artwork via the output unit to display the pieces of preview artwork; and when the user selects one of the displayed pieces of preview artwork, generate a purchase transaction including a signature according to the at least one piece of key information stored in the cryptocurrency wallet, transmit the purchase transaction to the NFT market server, and receive NFT status information of digital artwork corresponding to the selected one piece of preview artwork and having transaction details updated based on the purchase transaction.

According to one embodiment, the control unit may request, from the NFT market server, an inquiry about pieces of digital artwork owned by the user by transmitting the purchase transaction including the signature according to the at least one piece of key information and, in response to the requesting of the inquiry, receive a list of pieces of digital artwork corresponding to an NFT in which the user is recorded as an owner of the pieces of digital artwork from the NFT market server.

According to one embodiment, the control unit may receive, from the NFT market server, at least one piece of digital artwork corresponding to the received list of pieces of digital artwork, and sequentially output the received at least one piece of digital artwork through the output unit.

According to one embodiment, the TV platform may further include an interface unit capable of being connected to an external module including a cryptocurrency wallet, wherein the control unit reads the key information for the login signature and the transaction signature from the cryptocurrency wallet included in the external module.

According to an embodiment, when the user selects one of the displayed pieces of preview artwork, the control unit may request, from the NFT market server, information of a purchase screen for purchasing digital artwork corresponding to the selected one piece of preview artwork and, in response to the requesting, display a purchase screen for receiving an input of unique information of the user on one region of the display unit.

According to one embodiment, the control unit may identify whether the unique information of the user, the unique information being input to the purchase screen, corresponds to a user corresponding to the login signature, and when the user corresponding to the unique information is identical to the user corresponding to the login signature, generate the purchase transaction and transmits the generated purchase transaction to the NFT market server.

According to one embodiment, the TV platform may further include a camera capable of obtaining an image in one direction of the TV platform through an image sensor, wherein, when a user identified based on user unique information obtained by the camera is identical to the user corresponding to the login signature, the control unit generates the purchase transaction and transmits the generated purchase transaction to the NFT market server.

According to an embodiment, the user unique information may be quick response (QR) information of a user displayed on a mobile terminal of the user.

According to an embodiment, the TV platform may be a platform implemented as digital signage.

In addition, according to one aspect of the present disclosure, there is also provided a non-fungible token (NFT) market server including: a communication unit configured to establish a communication connection with at least one artist device, at least one television (TV) platform, and a plurality of terminals constituting a blockchain network; an NFT issuing unit configured to issue an NFT in which ownership and transaction details of digital artwork received from the at least one artist device are specified; a data block update unit configured to update a data block according to a blockchain method so that the data block according to the blockchain method includes the issued NFT; a memory configured to store a plurality of pieces of digital artwork received from a plurality of artist devices; and a control unit configured to provide an NFT marketplace which is an e-commerce space in which transaction of digital artwork is performed, control the NFT issuing unit to, when a transaction including a signature generated by at least one key related to a cryptocurrency account of an artist and digital artwork are received, issue an NFT corresponding to the digital artwork based on the transaction, control the data block update unit so that a plurality of data blocks according to the blockchain method include the issued NFT, and register the digital artwork for which the NFT is issued in the NFT marketplace.

According to one embodiment, the NFT market server may further include a preview generation unit configured to generate preview artwork for each of the digital artwork received from the at least one artist device, and the preview artwork may be digital artwork of which at least one of image quality and playback time is limited, or digital artwork into which a preset mark or an image is further inserted to be distinguishable from original digital artwork.

According to one embodiment, the control unit may receive, from a connected TV platform, information about a resolution of an image which may be played on the connected TF platform, and generate the preview artwork based on the received image resolution information with respect to the connected TV platform.

According to one embodiment, based on a request from a connected TV platform, the control unit may transmit at least one piece of preview artwork corresponding to at least one piece of digital artwork to the connected TV platform, and when a purchase request for particular preview artwork is received from the connected TV platform according to a selection by a user of the connected TV platform, transmit information about a purchase screen capable of receiving an input of preset unique information of the user to the connected TV platform in response to the purchase request.

According to one embodiment, wherein, when a purchase transaction including signature information according to at least one key related to a cryptocurrency account of the user of the connected TV platform is received from the connected TV platform, the control unit may perform transaction of digital artwork corresponding to the particular preview artwork according to the received purchase transaction, and control the data block update unit so that the plurality of data blocks according to the blockchain method further include transaction details according to the purchase transaction, when the transaction of the digital artwork is completed.

According to one embodiment, the preview generation unit may generate the preview artwork by inserting a watermarking mask into an image of the digital artwork, and the watermarking mask may be inserted into an alpha channel among channels in a screen of the digital artwork, and has a red-green-blue (RGB) value with a difference from an RGB value of the digital artwork by one bit.

According to one embodiment, the preview generation unit may insert a watermarking mask with an RGB value which is one bit lower than or higher than an RGB value of the digital artwork into the alpha channel, depending on a contrast in each portion of the digital artwork.

### Advantageous Effects of Invention

According to at least one of embodiments of the present disclosure, a television (TV) platform may be linked with a non-fungible token (NFT) market to be capable of receiving pieces of digital artwork which are on sale in the NFT market and playing received data on the TV platform so that a user may view, through the TV platform, the pieces of digital artwork which are on sale in the NFT market.

In addition, in the present disclosure, when a user wants to purchase digital artwork among pieces of digital artwork played on the TV platform, a purchase transaction according to a purchase process in the NFT market is transmitted to the NFT market through the TV platform so that the user may purchase the wanted digital artwork through the TV platform.

In addition, in the present disclosure, in a state when digital artwork is being played on the TV platform, a user may immediately purchase the digital artwork when the user wants to, such that the digital artwork may be purchased conveniently without having to use a credit card or a payment application.

In accordance with the detailed description, when the user has not purchased digital artwork, the digital artwork wherein a part of the digital artwork is in a limited state may be played on the TV platform to prevent illegal copying of the digital artwork being played on the TV platform before being purchased.

### Brief Description of Drawings

FIG. 1 is a block diagram illustrating a structure of a non-fungible token (NFT) market system according to an embodiment of the present disclosure, the NFT market system including an NFT market server configured to provide an NFT marketplace, and a TV platform linked with the NFT market server.
FIG. 2 is a detailed block diagram illustrating a structure of the TV platform in the NFT market system according to an embodiment of the present disclosure.
FIG. 3 is a detailed block diagram illustrating a structure of the NFT market server in the NFT market system according to an embodiment of the present disclosure.
FIG. 4 is a flowchart illustrating an operation process of registering digital artwork in the NFT market server through an artist device to sell the digital artwork in the NFT market system according to an embodiment of the present disclosure.
FIG. 5 is a flowchart illustrating an operation process of displaying preview artwork registered in the NFT server on the TV platform, and purchasing, by a user, digital artwork corresponding to the displayed preview artwork in the NFT market system according to an embodiment of the present disclosure.
FIG. 6 illustrates an example of playing, on the TV platform, the digital artwork purchased by the user through the NFT market system according to an embodiment of the present disclosure.
FIG. 7 illustrates an example of purchasing, by a user, digital artwork using a quick response (QR) code through the TV platform in the NFT market system according to an embodiment of the present disclosure.
FIG. 8 illustrates an example of inserting a watermark into digital artwork to prevent illegal copying by a user in the NFT market system according to an embodiment of the present disclosure.

### Mode for the Invention

It is noted that the technical terms used herein are used only to describe specific embodiments and are not intended to limit the disclosure. In addition, a singular representation used herein may include a plural representation unless it represents a definitely different meaning from the context. In general, a suffix such as "module" and "unit" may be used to refer to elements or components. Use of such a suffix herein is merely intended to facilitate description of the specification, and the suffix itself is not intended to give any special meaning or function.

In the present disclosure, the terms "comprising" and "including" should not be construed to necessarily include all of the elements or steps disclosed herein, and should be construed not to include some of the elements or steps thereof, or should be construed to further include additional elements or steps.

In addition, in describing the present disclosure, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings. In addition, each of the embodiments described below, as well as combinations of embodiments, are changes, equivalents, or substitutes included in the spirit and technical scope of the present disclosure, and may fall within the spirit and technical scope of the present disclosure.

Hereinafter, embodiments disclosed in this specification will be described in detail with reference to the accompanying drawings.

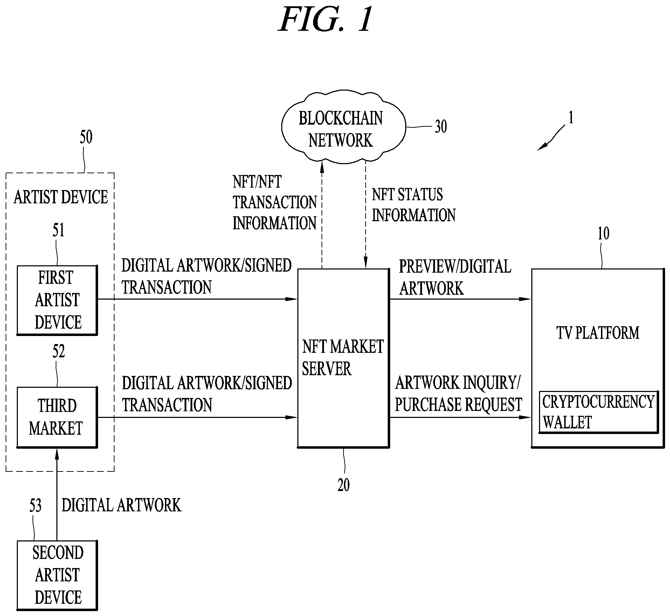

FIG. 1 is a block diagram illustrating a structure of a non-fungible token (NFT) market system 1 according to an embodiment of the present disclosure, the NFT market system 1 including an NFT market server configured to provide an NFT marketplace and a TV platform linked with the NFT market server.

Referring to FIG. 1, the NFT market system 1 according to an embodiment of the present disclosure may include an NFT market server 20, a blockchain network 30 connected to the NFT market server 20, a TV platform 10, and a plurality of artist devices 50.

Here, the NFT market server 20 provides the NFT marketplace. The NFT Marketplace is a virtual space where an NFT for digital artwork may be sold or purchased, and may refer to an e-commerce space where artists or multiple individual sellers may directly upload and sell digital artwork, etc. on Internet and multiple purchasers may purchase the uploaded digital artwork.

Here, the digital artwork may be sold or purchased using an NFT. An NFT stands for non-fungible token, which means 'an irreplaceable token' and may refer to a token that represents a digital asset with scarcity. An NFT certifies ownership of digital artwork and verify that ownership of the digital artwork is uniquely held by a person who owns the NFT. That is, the NFT means a token that verifies an owner of a digital asset.

The NFT has such a characteristic that a data block in which information regarding ownership and sale history is stored based on a blockchain is distributedly stored in a plurality of terminals constituting the blockchain network 30 through the blockchain network 30, thereby preventing counterfeiting, falsification, etc., and accordingly, an original issuer may be confirmed at any time. However, unlike a cryptocurrency that generally use a blockchain, since an NFT has a separate and unique recognition value, the NFT cannot be exchanged with each other and is irreplaceable. Due to having an irreplaceable and unique recognition value, the NFT may provide a virtual asset with values of scarcity and uniqueness. Thus, the NFT is used to sell or purchase digital artwork that may be created using a digitalization method, such as a video file, an image file, a music file, a game item, etc.

An NFT marketplace may be a virtual e-commerce space in which NFTs of pieces of such digital artwork may be sold or purchased. NFT marketplaces may classified into an open platform and a curation platform. Here, the open platform refers to a platform in which anyone may register digital artwork and issue an NFT for the digital artwork without approval. The curation platform refers to a platform in which only approved digital artwork may be registered, and an NFT for the approved digital artwork may be issued.

Meanwhile, the NFT market server 20 may provide such an NFT marketplace. Artists who create digital artwork may access the NFT marketplace through the artists' device (hereinafter referred to as an artist device 50) configured to be capable of being communicatively connected to the NFT market server 20 to register digital artwork created by the artists.

As illustrated in FIG. 1, when digital artwork is registered from the artist device 50 of an artist who accessed (logged in to) the NFT marketplace, the NFT market server 20 issues an NFT for the registered digital artwork, and generates a data block containing information regarding the issued NFT, a copyright holder, and transaction details. In addition, the generated data block is distributedly stored in a plurality of terminals that constitute the blockchain network 30. That is, the data block containing the information regarding the NFT, the copyright holder, and the transaction details for the registered digital artwork may be combined with other data blocks that constituting a blockchain, and stored in a chain-based distributed data storage environment, i.e., the blockchain network 30.

Meanwhile, the digital artwork may be registered not only by the artist who created the digital artwork but also by another individual seller who sells digital artwork. Here, the other individual seller is a third-party market 52 and may be a seller who receives digital artwork created by at least one artist 52 who directly creates the digital artwork, and sells the received digital artwork through the NFT marketplace. In this case, the third-party market 52 may sell the digital artwork instead of the artist 52, and in this case, the digital artwork created by the artist 52 may be connected to the NFT market server 20 through a device of the third-party market 52 (the artist device 50).

Meanwhile, the NFT market server 20 may request a signed transaction from the artist device 50 to generate an NFT for a transmitted digital artwork. Here, a transaction is a request to change a state of data stored in a blockchain, and signature information for verifying a requester of the transaction may be required. Accordingly, when the artist device 50 inputs a signature for the requested transaction and generates the signed transaction, the NFT market server 20 may receive the signed transaction and issue an NFT.

The NFT market server 20 may provide potential purchasers of pieces of digital artwork registered for sale with pieces of preview artwork for the pieces of registered digital artwork. Here, preview artwork refers to digital artwork in a limited state, and may mean digital artwork with limited playback time or image quality.

Meanwhile, a device of a purchaser provided with the pieces of preview artwork may play the provided pieces of preview artwork. Here, the device of the purchaser may be a device capable of playing the provided pieces of preview artwork in high quality images and sound. Desirably, the device of the purchaser may be a TV device or a digital signage system held by the purchaser. Hereinafter, the device of the purchaser including the TV device or the digital signage system is referred to as a TV platform 10.

In this case, the purchaser, that is, a user may play at least one piece of preview digital artwork provided by the NFT market server 20 through the TV platform 10. Therefore, the user may view the at least one piece of (preview) digital artwork created by an artist on a TV at home of the user.

Meanwhile, the preview digital artwork played through the TV platform 10 may be digital artwork with limited picture quality, playback time, etc. as described above. Therefore, the user needs to purchase digital artwork corresponding to particular preview digital artwork to play complete digital artwork. In this case, the user may purchase the digital artwork using the TV platform 10.

To do so, the TV platform 10 may transmit a purchase request for purchasing particular digital artwork to the NFT market server 20. To do so, the TV platform 10 may generate a transaction for the purchase request and generate a transaction including a signature proving that the transaction for the purchase request was requested from a genuine user. To do so, the TV platform 10 may be configured to include a cryptocurrency wallet storing a key for generating the signature, or be connected to a module including the cryptocurrency wallet. Then, a transaction signed through the key stored in the cryptocurrency wallet is generated, and a purchase request including the signed transaction may be transmitted to the NFT market server 20.

Meanwhile, when the purchase request is received from the TV platform 10 and a deal is completed, the NFT market server 20 may update NFT status information based on the signed transaction included in the purchase request. To do so, NFT transaction information for updating NFT information may be transmitted to the blockchain network 30, and the NFT status information updated based on the NFT transaction information may be received from the blockchain network 30. In addition, the received NFT status information may be transmitted to the TV platform 10 in response to the purchase request.

Accordingly, the user of the TV platform 10 may check a list of digital artwork purchased by the user based on the received NFT status information, and upon a request by the user, the user may receive data of the digital artwork purchased by the user from the NFT market server 20. Here, the digital artwork is unlimited digital artwork, and the user may display and view the complete digital artwork played through the TV platform 10.

Meanwhile, the third-party market 52 described above may be a purchaser who purchased an NFT for particular digital artwork. In this case, the artist device 50 of the third-party market 52 may be the TV platform 10. That is, the TV platform 10 according to an embodiment of the present disclosure may be connected to the NFT market server 20 to sell the digital artwork, not to purchase the digital artwork, according to a request and an approval by the user, and register, in the NFT marketplace, the NFT for the particular digital artwork purchased by the user to sell the NFT. In this case, the TV platform 10 may operate as the artist device 50 and transmit, to the NFT market server 20, a transaction signed to sell the NFT. To do so, the cryptocurrency wallet included in the TV platform 10 may provide a key for signing the transaction, and based on the key provided by the cryptocurrency wallet, the TV platform 10 may generate and transmit the signed transaction to the NFT market server 20.

With reference to FIG. 1, the configurations of the NFT market server 20 configured to provide an NFT marketplace according to an embodiment of the present disclosure, the artist devices 50 configured to register pieces of digital artwork in the NFT marketplace, and the NFT market system 1 in which the pieces of digital artwork registered in the NFT marketplace may be purchased through the TV platform 10 according to an embodiment of the present disclosure are described.

Hereinafter, configurations of the TV platform 10 and the NFT market server 20, an operation process of registering, by the artist devices 50, pieces of digital artwork in an NFT marketplace through the NFT market server 20, and an operation process of purchasing, by a user, the pieces of digital artwork registered in the NFT marketplace through the TV platform 10 are described in detail with reference to a plurality of block diagrams and flowcharts.

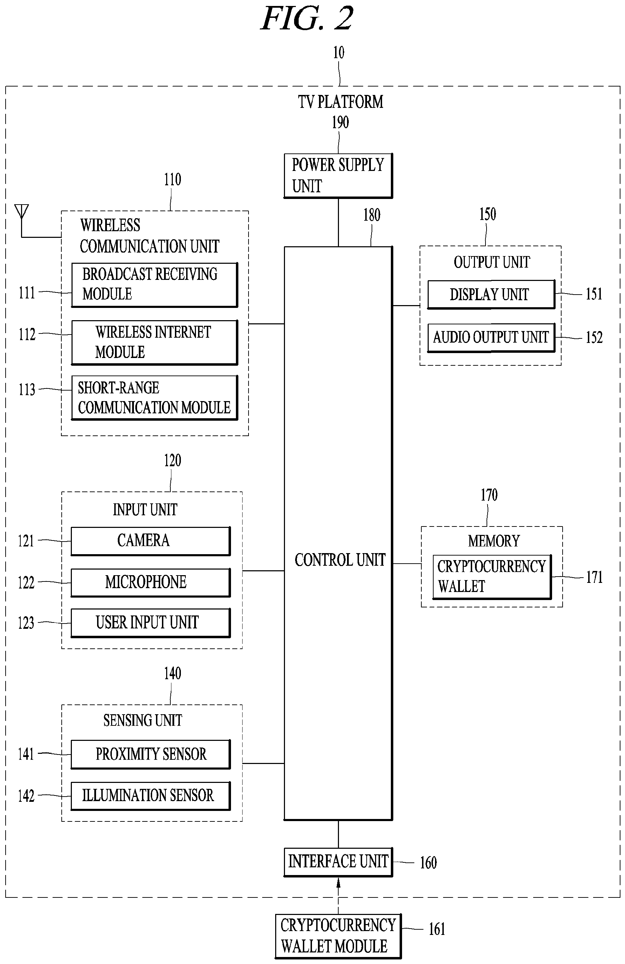

FIG. 2 is a detailed block diagram illustrating a structure of the TV platform 10 in the NFT market system 1 according to an embodiment of the present disclosure.

As illustrated in FIG. 2, the TV platform 10 according to an embodiment of the present disclosure may include a wireless communication unit 110, an input unit 120, a sensing unit 140, an output unit 150, an interface unit 160, a memory 170, a control unit 180, a power supply unit 190, etc. Those components illustrated in FIG. 2 are not essential for implementing the TV platform 10, and the TV platform 10 described herein may include more or less components compared to the components described above.

In detail, among the components described above, the wireless communication unit 110 may include one or more modules configured to receive a broadcast signal from the TV platform 10 and enable wireless communication between the TV platform 10 and a preset external server. The wireless communication unit 110 may include at least one from among a broadcast receiving module 111, a wireless Internet module 112, and a short-range communication module 113.

The broadcast receiver module 111 receives a broadcast signal and/or broadcast-related information from an external broadcast management server through a broadcast channel. The broadcast receiver module 111 may include a tuner and a demodulator to receive radio frequency (RF) broadcast signals. That is, the broadcast receiver module 111 selects an RF broadcast signal corresponding to a channel selected by a user among RF broadcast signals received through an antenna using a tuner (not shown), and converts the RF broadcast signal into an intermediate frequency signal or a baseband video/audio signal.

When the RF broadcast signal is a digital broadcast signal, the tuner may convert the RF broadcast signal into a digital intermediate frequency (IF) signal (DIF). On the other hand, when the RF broadcast signal is an analog broadcast signal, the tuner may convert the RF broadcast signal into an analog baseband video/audio signal (composite video banking sync (CVBS)/sound intermediate frequency (SIF)). As such, the tuner may be a hybrid tuner capable of processing a digital broadcast signal and an analog broadcast signal.

Meanwhile, the digital IF signal (DIF) output from the tuner may be input to the demodulator (not shown), and the analog baseband video/audio signal (CVBS/SIF) output from the tuner may be input to the control unit 180.

The tuner may receive a single-carrier RF broadcast signal according to an advanced television systems committee (ATSC) method or a multiple-carrier RF broadcast signal according to a digital video broadcasting (DVB) method.

Additionally, the broadcast receiver module 111 may include a plurality of tuners, for example, first and second tuners. In this case, the first tuner may receive a first RF broadcast signal corresponding to a broadcast channel selected by the user, and the second tuner may sequentially or periodically receive a second RF broadcast signal corresponding to a pre-stored broadcast channel. The second tuner may convert the RF broadcast signal into a digital IF signal (DIF) or an analog baseband video/audio signal (CVBS/SIF) by using a same method as that by the first tuner.

The demodulator may receive the digital IF signal (DIF) converted by the tuner and perform a demodulation operation. To do so, the demodulator may include a trellis decoder, a de-interleaver, a Reed-Solomon decoder, and the like, or a convolution decoder, a de-interleaver, a Reed-Solomon decoder, and the like depending on whether the digital IF signal follows the ATSC method or the DVB method.

The demodulator may perform demodulation and channel decoding, and then, output a stream (transport stream (TS)) signal. In this case, the stream signal may be a signal in which an image signal, a voice signal, or a data signal is multiplexed. A signal output from the demodulator may be input to the control unit 180, and demultiplexing, image/voice signal processing, etc. may be performed on the input signal.

The wireless internet module 112 refers to a module for wireless internet access and may be internally or externally equipped with the mobile terminal 10. The wireless internet module 112 may be configured to transmit/receive a wireless signal via a communication network according to wireless internet technologies.

The wireless internet technologies may include wireless local area network (WLAN) (wireless-fidelity (Wi-Fi)), wireless broadband (WiBro), world interoperability for microwave access (WiMAX), high speed downlink packet access (HSDPA), etc. The wireless Internet module 112 may wirelessly access the Internet according to at least one wireless Internet technology within a scope including Internet technologies which are not described above, and be connected to at least one preset server through the Internet to transmit/receive data.

The short-range communication module 113 is used to perform short-range communication, and may support short-range communication using at least one of Bluetooth^{™}, radio frequency identification (RFID), infrared data association (IrDA), ultra wideband (UWB), ZigBee, near field communication (NFC), Wi-Fi, Wi-Fi Direct, and wireless universal serial bus (USB) technologies.

The short-range communication module 113 may transmit an image signal, a voice signal, and a data signal provided from at least one other connectible external device to the control unit 180. Additionally, the short-range communication module 113 may transmit an image signal, a voice signal, and a data signal of various media files stored in an external storage device such as a memory device, a hard disk, etc. to the control unit 180. Additionally, the short-range communication module 113 may transmit an image signal, a video signal, and a data signal processed by the control unit 180 to the at least one other external device or another external device.

Meanwhile, a digital signal output from the short-range communication module 113 may also include a stream signal. The stream signal may be a signal in which an image signal, a voice signal, and a data signal are multiplexed.

The input unit 120 may include a camera 121 configured to input an image signal, a microphone (hereinafter, a mike) 122 configured to input an audio signal, and a user input unit 123 configured to receive an input of information from a user. Here, voice data or image data collected by the input unit 120 may be analyzed and processed according to a control command by a user.

The input unit 120 may include one or a plurality of cameras 121. The camera 121 may acquire and process an image frame of a still image or a moving image obtained from one direction of the TV platform 10 through an image sensor. The processed image frame may be displayed on a display unit 151 or stored in the memory 170.

The microphone 122 may process an external sound signal into electrical voice data. The processed voice data may be variously utilized in accordance with a function which is being performed by the TV platform 10 (or an application program being executed). Various noise removal algorithms which remove noise generated in a process of an input of receiving the external sound signal may be implemented in the microphone 122.

The user input unit 123 is configured to receive an input of information from a user. When the information is input via the user input unit 123, the control unit 180 may control an operation of the TV platform 10 to correspond to the input information. The user input unit 123 may include a mechanical input unit (or a mechanical key, for example, a button located on a front, rear, or side surface of the TV platform 10, a dome switch, a jog wheel, a jog switch, etc.) and a touch type input unit.

The sensing unit 140 may include at least one sensor configured to sense at least one of environment information surrounding the TV platform 10 and user information. For example, the sensor unit 140 may include at least one of a proximity sensor 141 and an illumination sensor 142, and include at least one from among a motion sensor, a red-green-blue (RGB) sensor, an infrared (IR) sensor, an ultrasonic sensor, an optical sensor (for example, a camera (refer to the camera 121)), and a microphone (refer to the microphone 122).

The output unit 150 is configured to generate an output relevant to visual/audio information, and may include the display unit 151 and an audio output unit 152.

The display unit 151 displays (outputs) information processed by the TV platform 10. For example, the display unit 151 may output broadcast images according to various broadcast signals received through the broadcast receiver module 111. Additionally, the display unit 151 may output image information about digital artwork provided through the wireless Internet module 112. In addition, upon a request by the user, execution screen information of an application program driven in the TV platform 10, or user Interface (III) or graphic user interface (GUI) information according to the execution screen information may be displayed.

Meanwhile, the display unit 151 may be configured as a display unit to which various technologies for advanced image playback are applied. As an example, technologies for improving image quality and contrast representation, such as a nanocell, a quantum dot, etc. and technologies for defining a wide viewing angle may be applied to the display unit 151.

In addition, the display unit 151 may be configured as a three-dimensional (3D) display unit configured to display a 3D image. A 3D display method such as a stereoscopic method (a method using glasses), an autostereoscopic method (a glasses-free method), a projection method (a holographic method), or the like may be applied to the 3D display unit.

The audio output unit 152 may output audio data received from the wireless communication unit 110 or stored in the memory 170. The audio output unit 152 may output audio signals related to functions performed by the TV platform 10 (for example, an output of a broadcast image, an output of digital artwork, etc.). To do so, the audio output unit 152 may include a speaker.

The interface unit 160 functions as a passage for various types of external devices connected to the TV platform 10. The interface unit 160 may include at least one of a wired/wireless headset port, a wired/wireless data port, a memory card port, a port which connects to a device equipped with an identification module, an audio input/output (I/O) port, a video I/O port, and an earphone port. In response to connection of an external device to the interface unit 160, the TV platform 10 may perform proper control related to the connected external device.

Meanwhile, the interface unit 140 may transmit a signal input by the user to the control unit 180 or transmit a signal transmitted from the control unit 180 to the user. To do so, the interface unit 140 may be connected to an external input device (e.g., a remote controller) (not shown) wiredly or wirelessly. Additionally, a user input signal input from a power key, a channel key, a volume key, a setting key, etc. through the connected external input device may be transmitted to the control unit 180. Here, the external input device may include at least one sensor configured to sense a gesture, a position, a touch, etc. of the user.

In addition, the memory 170 stores data supporting various functions of the TV platform 10. The memory 170 may store a plurality of application programs (or applications) driven in the TV platform 10, information related to broadcast programs, and data and commands for operations of the TV platform 10. At least some of the application programs may be downloaded from an external server via wireless communication. In addition, at least some of the application programs may be present in the TV platform 10 from time of being released, to perform basic functions of the TV platform 10 (e.g., a broadcast signal reception function, a broadcast signal playback function, a broadcast program output function, etc.). The application programs may be stored in the memory 170 and installed in the TV platform 10 to be driven to perform an operation (or a function) designated by the control unit 180.

In addition to operations related to the application programs, the control unit 180 generally controls overall operations of the TV platform 10. The control unit 180 may process signals or data received or input through the components described above, or process signals or data to be output. To do so, the control unit 180 may run an application program stored in the memory 170, output information according to a request by the user, or provide a function requested by the user.

In detail, when image information and sound information according to various data is received through the wireless communication unit 110, the control unit 180 may control the output unit 150 to output the image information and the sound information through the display unit 151 and the audio output unit 152. As an example, the control unit 180 may control the output unit 150 to output an image and sound of a particular broadcast channel through the broadcast receiver module 111, or control the output unit 150 to output multimedia data stored in an external device connected through the interface unit 160.

Alternatively, the control unit 180 may control the wireless communication unit 110 to be connected to the NFT market server 20. In addition, the wireless communication unit 110 may be controlled to receive various data including preview digital artwork from the NFT market server 20, and the output unit 150 may be controlled to output image information and sound information corresponding to the received various data. In addition, when a request by the user is present, transaction information required by the NFT market server 20 to purchase digital artwork may be generated, and the generated transaction information may be transmitted to the NFT market server 20.

The transaction information may be transaction information including a transaction signature to verify the user, that is, a signed transaction. In addition, the transaction signature may be generated based on a private key of the user. To do so, the memory 170 may include a cryptocurrency wallet 171 including the private key of the user and a public key. In addition, the control unit 180 may read the private key from the cryptocurrency wallet 171 to generate a transaction signature, and transmit a transaction including the transaction signature, i.e., a signed transaction to the NFT market server 20.

The cryptocurrency wallet 171 may be configured in a hardware type stored in a separate external module, instead of a software type stored in the memory 170. In this case, a cryptocurrency wallet module 171 including the cryptocurrency wallet may be connected to the control unit 180 through the interface unit 160. In addition, upon the connection of the cryptocurrency wallet module 171, the control unit 180 may read a private key from the cryptocurrency wallet module 171 and generate a transaction signature according to a request by the user. In addition, a transaction (a signed transaction) including a signature may be transmitted to the NFT market server 20.

The power supply unit 190 may be configured to receive external power or internal power and supply power needed for operation of respective elements and components according to control by the control unit 180.

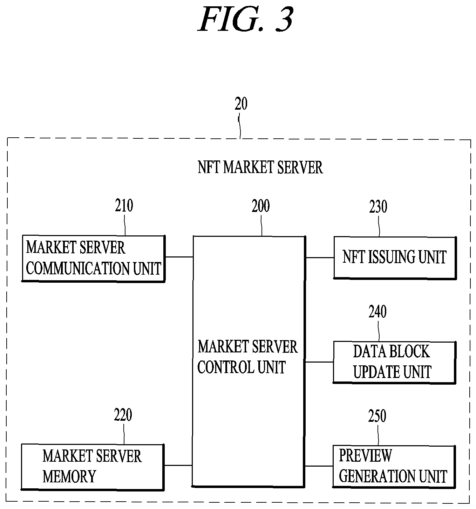

FIG. 3 is a detailed block diagram illustrating a structure of the NFT market server 20 in the NFT market system 1 according to an embodiment of the present disclosure.

Referring to FIG. 3, the NFT market server 20 may be configured to include a market server control unit 200, a market server communication unit 210 connected to the market server control unit 200, a market server memory 220, an NFT issuing unit 230, a data block update unit 240, and a preview generation unit 250. Those components illustrated in FIG. 3 are not essential for implementing the NFT market server 20, and the NFT market server 20 described herein may be provided with more or less components than the components described above.

The market server communication unit 210 is a communication unit configured to perform internet access, and may connect the NFT market server 20 to the Internet through at least one internet connection technology. Additionally, the market server communication unit 210 may be simultaneously connected to at least one artist device 50 to perform data communication, and may also be simultaneously connected to at least one TV platform 10 to perform data communication. In addition, the market server communication unit 210 may be connected to a plurality of terminals constituting the blockchain network 30 to perform data communication.

The NFT issuing unit 230 may issue an NFT for digital artwork received from the artist device 50 according to control by the market server control unit 200. In this case, the NFT issuing unit 230 may generate an NFT in which ownership and transaction details of the digital artwork are specified. Here, an NFT is a token-type virtual asset generated based on a blockchain. The NFT may be a virtual asset generated according to an Ethereum request for comment (ERC)-721 protocol, and may be a unique and non-fungible virtual asset which is indistinguishable from other assets according to an identification (ID), a value, etc. and is incompatible.

Meanwhile, the NFT issued by the NFT issuing unit 230 may be generated by the data block update unit 240 in a data block that may be stored using a chain-based distributed data storage method (a blockchain method). That is, the data block update unit 240 may generate a data block including the NFT according to a blockchain algorithm and other transaction information in the blockchain network, and connect the generated data block to other adjacent data blocks using a hash. That is, it may be understood that the data block update unit 240 updates the data block according to the blockchain algorithm to include the NFT issued by the NFT issuing unit 230 through a transaction.

Meanwhile, a signed transaction may be needed for the data block update unit 240 to update the data block. To do so, the market server control unit 200 may request a transaction signature from the artist device 50 through the market server communication unit 210 and receive the signed transaction in response to the requesting. Then, based on the received transaction, the data block may be updated to include the NFT corresponding to the digital artwork received from the artist device 50, and the updated data block may be stored in the plurality of terminals constituting the blockchain network 30 according to the blockchain algorithm.

Meanwhile, the preview generation unit 250 may issue an NFT and generate preview artwork for digital artwork of which the NFT is distributedly stored in the blockchain network 30.

For example, the preview generation unit 250 may reduce digital artwork in an image or video form to have a present size or at a preset rate to generate preview artwork for the digital artwork. Alternatively, preview artwork for the digital artwork may be created by limiting sharpness or saturation of the digital artwork by performing masking or by inserting a watermark. Alternatively, when the digital artwork has a video form, preview artwork for the digital artwork may be created by limiting playback time to certain time or less.

Alternatively, the preview generation unit 250 may generate preview artwork by changing a resolution according to resolutions that may be provided by the TV platform 10, based on resolution information provided by the TV platform 10. In this case, the NFT market server 20 may receive, from the TV platform 10 connected to the NFT market server 20 through a login of the user, information of image resolution that may be supported by the TV platform 10, and create the preview artwork based on the received information about image resolution.

In addition, the generated preview artwork may be stored in the market server memory 220 to correspond to original digital artwork.

In addition, the market server memory 220 stores data supporting various functions of the NFT market server 20. The market server memory 220 may store multiple applications needed to generate an NFT marketplace in the NFT market server 20, issue an NFT according to a blockchain algorithm, and distributedly store data blocks. In addition, data and commands for operation of the NFT market server 20 may be stored.

Additionally, the market server memory 220 may store data of pieces of digital artwork stored from the market server communication unit 210. Additionally, preview artwork created corresponding to each of the pieces of digital artwork may be stored. In addition, when there is a request from the market server control unit 200, a list of pieces of preview artwork corresponding to the stored pieces of digital artwork is provided to the market server control unit 200 and, when there is a request, data corresponding to the stored pieces of digital artwork or the pieces of preview artwork may be provided to the market server control unit 200.

The market server control unit 200 may control overall operations of the NFT market server 20. As an example, the NFT market server 20 may be a platform for providing an NFT marketplace, and the market server control unit 200 may manage the NFT marketplace.

As an example, the market server control unit 200 may receive digital artwork, and receive a signed transaction from at least one artist device 50 connected through the market server communication unit 210. Then, an NFT for the received digital artwork may be issued, and a blockchain data block may be updated to include an NFT, and a creator and transaction information of the digital artwork based on the signed transaction. Then, the updated blockchain data block may be distributedly stored in a plurality of terminals constituting the blockchain network 30, and the data blocks may be connected to each other. In addition, when there is a request, status information of distributedly stored NFT data may be received from the blockchain network 30, and the received NFT status information may be provided in response to the request.

Additionally, according to a request from at least one connected TV platform 10, the market server control unit 200 may transmit at least one piece of preview artwork to the at least one connected TV platform 10. Additionally, a purchase request for digital artwork corresponding to particular preview artwork may be received from any one TV platform 10. In addition, when purchase of the digital artwork is completed, the blockchain data block may be updated to include transaction information according to the purchase of the digital artwork based on a transaction included in the purchase request. In addition, the updated data block may be distributedly stored in the blockchain network 30, and when there is a request, status information of the distributedly stored NFT data may be received and the received status information of the distributedly stored NFT data may be provided in response to the request.

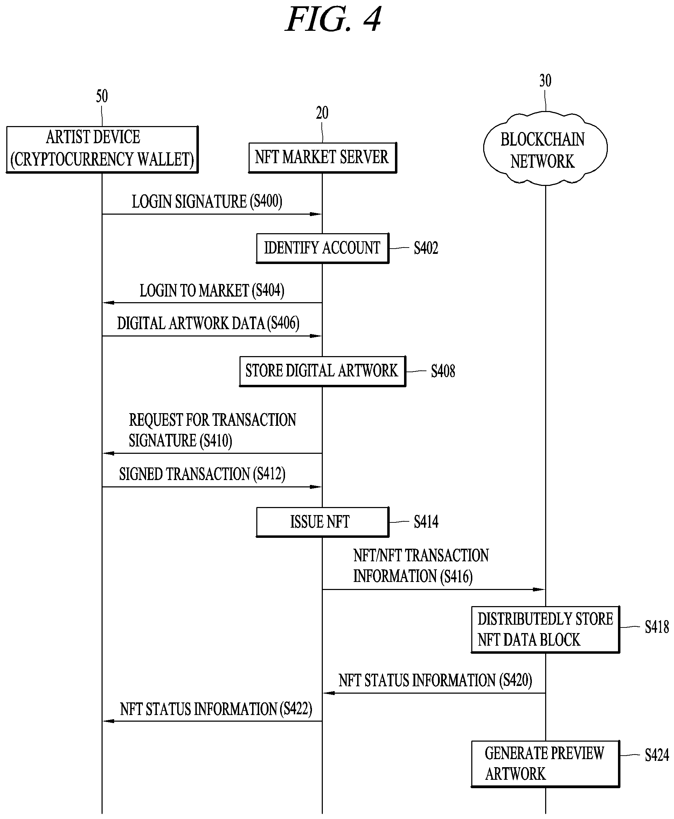

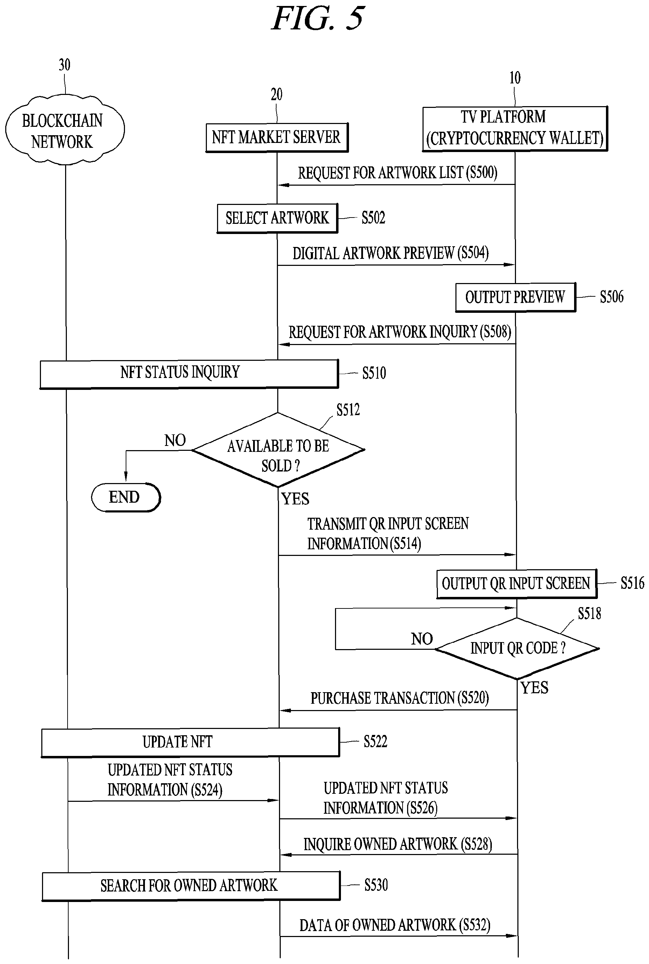

FIGS. 4 and 5 are flowcharts illustrating a process of registering digital artwork at an NFT marketplace through the artist device 50 in the NFT market system 1 according to an embodiment of the present disclosure, and a process of purchasing, by a user, the digital artwork from the NFT marketplace through the TV platform 10.

As described above, the NFT marketplace is operated and managed by the NFT market server 20. Thus, transmitting data to the NFT marketplace may be identical to transmitting data to the NFT market server 20, and receiving data from the NFT marketplace may be identical to receiving data from the NFT market server 20. Thus, in the following description, it is considered that the NFT marketplace is the same as the NFT market server 20. Accordingly, hereinafter, transmitting data to the NFT market server 20 may be understood as transmitting data to the NFT marketplace, and receiving data from the NFT market server 20 may be understood as transmitting data from the NFT marketplace.

FIG. 4 is a flowchart illustrating an operation process of registering digital artwork in the NFT market server 20 through the artist device 50 to sell the digital artwork in the NFT market 1 system according to an embodiment of the present disclosure.

Referring to FIG. 4, in the NFT market system 1 according to an embodiment of the present disclosure, an artist may access the NFT market system 1 through the artist device 50. A login signature for logging in may be transmitted to the NFT market system 1 (S400). Then, the artist may access the NFT marketplace.

The login signature may include a key for a cryptocurrency-related account. As an example, the key may be a public key or a private key of the artist. As such, when the login signature includes particular key information related to a cryptocurrency account, the NFT market server 20 may identify the cryptocurrency account of the artist based on the login signature (S402).

The public key or the private key of the artist may be information stored in a cryptocurrency wallet of the artist. In this case, the cryptocurrency wallet of the artist may be included in the artist device 50 in a form of a software module or connected to the artist device 50 through a separate hardware module (for example, a cryptocurrency wallet module).

Meanwhile, when login is completed using the key for a cryptocurrency-related account, the NFT market server 20 may provide market login information to the artist device 50 so that the artist may identify that the login to the NFT marketplace has been completed (S404). In this case, the market login information may include a list of digital artwork that has been uploaded by the artist up to present time, and state information of the digital artwork, i.e., information regarding whether the digital artwork has been sold, etc. Additionally, the market login information may include cryptocurrency account information of the artist, that is, information about cryptocurrencies owned by the artist.

Meanwhile, when the login to the NFT marketplace is completed, the artist may transmit data of digital artwork created by the artist to the NFT market server 20 through the artist device 50 (S406). Then, the NFT market server 20 may store the digital artwork received from the artist device 50 in the market server memory 220 (S408).

When the digital artwork is stored in the NFT market server 20, the NFT market server 20 may request a transaction signature for generating a transaction from the artist device 50 (S410). Here, the transaction is to issue an NFT for the stored digital artwork and distributedly store the NFT according to a blockchain algorithm, and the transaction signature may be to verify that the transaction was requested by the artist.

Here, the transaction signature may be generated based on the private key of the artist. Therefore, when a request for a transaction signature is received from the NFT market server 20 in operation S410, the artist device 50 reads the private key from the cryptocurrency wallet of the artist in response to the request and generate the transaction signature based on the read private key. Then, a signed transaction may be transmitted to the NFT market server 20 (S412). Here, the transaction signature may include information defining a state of digital artwork which is stored at present. For example, the transaction information may include information about whether the digital artwork is for sale.

Meanwhile, when the signed transaction is received, the NFT market server 20 may issue an NFT corresponding to the stored digital artwork (S414). Then, based on the transaction (the signed transaction) received in operation S412, data blocks in the blockchain network 30 may be updated to include a data block including the issued NFT, a creator of the digital artwork, and the transaction information. That is, the issued NFT, the creator of the digital artwork, and the transaction information may be distributedly stored in a plurality of terminals constituting the blockchain network 30 (S418).

When the updating of the data blocks in the blockchain network 30 is completed, the NFT market server 20 may receive status information of the NFT included in the updated data blocks from the blockchain network 30, that is, NFT status information (S420). Then, the received NFT status information may be transmitted to the artist device 50 so that the artist may identify that the digital artwork created by the artist has been registered in the NFT marketplace (S422).

When the updating of the data blocks in the blockchain network 30 is completed, the NFT market server 20 may generate preview artwork for the stored digital artwork (S424). In this case, the NFT market server 20 may generate the preview artwork by reducing the digital artwork or extracting a portion corresponding to a part of playback time. Alternatively, sharpness or saturation of the digital artwork by may be limited by performing masking or inserting a watermark. Meanwhile, the masking or the watermark may be used as an element indicating that the corresponding digital artwork is preview artwork that is distinguished from original digital artwork. Then, the NFT market server 20 may store the generated preview artwork to correspond to the original digital artwork.

FIG. 5 is a flowchart illustrating an operation process of displaying preview artwork registered in the NFT market server 20 on the TV platform 10 and purchasing, by a user, digital artwork corresponding to the displayed preview artwork in the NFT market system 1 according to an embodiment of the present disclosure. Hereinafter, a description with reference to FIG. 5 will be provided on an assumption that the user has accessed, i.e., has completed login to an NFT marketplace through the TV platform 10. Here, the login may include a process in which the user transmits a login signature (e.g., key information related to a cryptocurrency account) to the NFT market server 20, the NFT market server 20 identifies a cryptocurrency account owned by the user through the login signature, and the TV platform 10 receives, from the NFT market server 20, market login information indicating that the login to the NFT marketplace is completed.

Referring to FIG. 5, the TV platform 10 of the NFT market system 1 according to an embodiment of the present disclosure may request, from the NFT market server 20, a list of artwork in accordance with tastes of the user who has logged in (S500). As an example, when the user specifies a condition such as a particular genre, a particular artist or artist group, or a digital artwork type, etc., the TV platform 10 may requests a list of artwork corresponding to the conditions specified by the user from the NFT market server 20.

Then, when the condition specified by the user is received through the requesting of the list of artwork received from the TV platform 10 in operation S500, the NFT market server 20 may select pieces of digital artwork that meet the received condition from among pieces of stored digital artwork (S502). In addition, pieces of preview artwork respectively corresponding to the selected pieces of digital artwork may be transmitted to the TV platform 10 in response to the requesting of the list of artwork (S504).

When the pieces of preview artwork are received from the NFT market server 20, the TV platform 10 may output the received pieces of preview artwork sequentially or output only preview artwork designated by the user (S506). As an example, the TV platform 10 may display thumbnail images for the received pieces of preview artwork through the display unit 151 and output, in a preset order, only pieces of preview artwork for at least one thumbnail image selected by the user from among the displayed thumbnail images.

When the pieces of preview artwork are being output as described above, the user may select particular preview artwork. As an example, while preview artwork is being output, when a preset key provided on a remote controller, etc. is input, the control unit 180 of the TV platform 10 may determine that the preview artwork which is output at a time when the present key is input is selected by the user.

As such, when particular preview artwork is selected by the user, the TV platform 10 may transmit an artwork inquiry request for the selected particular preview artwork to the NFT market server 20 (S508). Here, the artwork inquiry request may be a request to check whether the particular preview artwork is available to be sold. Therefore, the NFT market server 20 may inquire an NFT status of digital artwork corresponding to the particular preview artwork from the blockchain network 30 (S510). Then, depending on the inquired NFT status, whether the corresponding digital artwork is available to be sold may be determined (S512).

As an example, when a creator or a present owner of the digital artwork prohibits sale of the digital artwork through a transaction, the corresponding digital artwork may not be available for sale. Then, in operation S512, the NFT market server 20 may end a purchase process for the digital artwork. In this case, the NFT market server 20 may provide, to the user who selected the particular preview artwork, notification information notifying that the sale of the digital artwork corresponding to the particular preview artwork is currently prohibited.

However, as a result of the determination in operation S512, when the digital artwork corresponding to the particular preview artwork is currently available for sale, the NFT market server 20 may provide, to the TV platform 10, access information for accessing a purchase page on the TV platform 10 where the digital artwork may be purchased. Then, the user may access the purchase page through the access information, and perform user authentication and payment through the purchase page to purchase the digital artwork corresponding to the particular preview artwork.

However, the NFT market server 20 and the TV platform 10 according to an embodiment of the present disclosure may simultaneously perform the user authentication and the payment using preset authentication information of the user. That is, as a result of the determination in operation S512, the NFT market server 20 may transmit, to the TV platform 10, information about a quick response (QR) code input screen which requests a designated QR code of the user as authentication information of the user (S514). Then, the TV platform 10 may output the QR code input screen information provided by the NFT market server 20 (S516).

Here, the QR code input screen information may be screen information including a purchase page in which the digital artwork may be purchased. That is, the QR code input screen information may be screen information for, when designated QR information of the user is input to the QR code input screen information, automatically accessing a purchase page in which the digital artwork may be purchased. In this case, the QR code is personal authentication information of the user, and when the QR code is input, authentication of the user may be also performed. In addition, as described above, when the user logs in to the NFT marketplace through the TV platform 10, a cryptocurrency account owned by the user is identified based on a login signature transmitted to the NFT market server 20 while logging in. Thus, when the QR code is input, payment for the digital artwork may be performed through the cryptocurrency account owned by the user. That is, when the user inputs the QR code into the QR code input screen information provided from the NFT market server 20, purchase of the digital artwork corresponding to the selected preview artwork may be completed.

When the QR code input screen is output in operation S516, the TV platform 10 may determine whether the designated QR code of the user is input to the QR code input screen (S518). As an example, the QR code may be a QR code of a user previously identified by the login signature.

As an example, when the QR code input to the QR code input screen is not the QR code of the user previously identified by the login signature, the TV platform 10 may output information indicating that the input QR code is not the designated QR code. When a QR code other than a designated QR code of the user is input for a preset number of times or more, a transaction process for digital artwork may be terminated.

On the other hand, as a result of the determination in operation S518, when the input QR code is the QR code of the user previously identified by the login signature, the TV platform 10 may purchase the digital artwork through a cryptocurrency account of the user previously identified during the logging in. In addition, when the purchasing, i.e., the payment is completed, a purchase transaction may be transmitted to the NFT market server 20 to update an NFT according to the purchasing of the digital artwork (S520).

Here, the purchase transaction may include a transaction signature for verifying transaction details of the user according to the purchasing. In addition, the transaction signature may be generated based on a private key of the user. To do so, the TV platform 10 may read the private key of the user from the cryptocurrency wallet 171 or 161 included or connected, and generate a transaction signature based on the read private key. In addition, the purchase transaction including the transaction signature, i.e., a signed purchase transaction may be transmitted to the NFT market server 20 in operation S520 described above.

Then, the NFT market server 20 may update the NFT based on the received purchase transaction (the signed purchase transaction) (S522). To do so, the NFT market server 20 may update data blocks containing the NFT for the digital artwork based on the purchase transaction to further include transaction details according to the input of the QR code, and distributedly store the updated data blocks in a plurality of terminals constituting the blockchain network 30. Then, status information about the updated NFT may be received from the blockchain network 30 (S524). Then, an update status of the NFT for the digital artwork may be displayed to the user by transmitting the status information about the updated NFT to the TV platform 10 (S526).

The user may request to inquire digital artwork owned by the user through the TV platform 10 (S528). In this case, when an inquiry request is received from the TV platform 10, the NFT market server 20 may search for NFTs owned by the user previously identified by the login signature, based on transaction details of NFTs distributedly stored in the blockchain network 30. Here, the inquiry request may be a signed transaction including a key related to a cryptocurrency account of the identified user. In this case, the NFT market server 20 may search for the NFTs from the blockchain network 30 based on the signed transaction.

The NFT market server 20 may search for pieces of digital artwork corresponding to found NFTs from the market server memory 220 (S530). Then, a list of the found pieces of digital artwork may be transmitted to the TV platform 10 in response to the inquiry request (S532).

Then, the list of the found pieces of digital artwork may be displayed through the TV platform 10, and at least one piece of digital artwork selected from the displayed list may be output on the TV platform 10. That is, the digital artwork owned by the user may be displayed through the TV platform 10.

Here, the TV platform 10 may output at least one piece of digital artwork selected by the user based on a preset condition. For example, when the user is neither viewing a broadcast image nor playing multimedia data, that is, when the TV platform 10 is not operating as a TV device, the TV platform 10 may output the at least one piece of digital artwork. As an example, when the user ends viewing a broadcast program (e.g., by inputting an end key), the TV platform 10 may perform a function of automatically outputting the at least one piece of digital artwork. That is, when broadcast viewing or operation is ended, the TV platform 10 may operate as a display device configured to output digital artwork.

Additionally, when operating as a display device, the TV platform 10 may change digital artwork which is being output at a certain time interval to prevent a burn-in phenomenon. To do so, the TV platform 10 may receive a selection of a plurality of pieces of digital artwork from the user and sequentially output the plurality of pieces of digital artwork according to a preset order.

Alternatively, when the user selects only one piece of digital artwork, the TV platform 10 may turn off the display unit 151 for a certain period of time at a preset time interval to prevent a burn-in phenomenon. Alternatively, the display unit 151 may be turned on to output the digital artwork only when a preset condition such as a time condition (e.g., 3:00 PM to 4:00 PM) is met.

In the above description, the structure of the NFT market system 1 according to an embodiment of the present disclosure and the structures of the TV platform 10 and the NFT market server 20 each constituting the NFT market system 1 have been described in detail. In addition, a process of registering, by the artist devices 50, digital artwork in the NFT marketplace through the NFT market server 20, and a process of inquiring and purchasing, by a user, digital artwork through the TV platform 10 are described in detail.

Hereinafter, an example in which digital artwork is displayed through the TV platform 10 according to an embodiment of the present disclosure, an example in which a QR code is input to purchase digital artwork, and an example in which preview artwork is created are described in detail with reference to a plurality of example drawings.

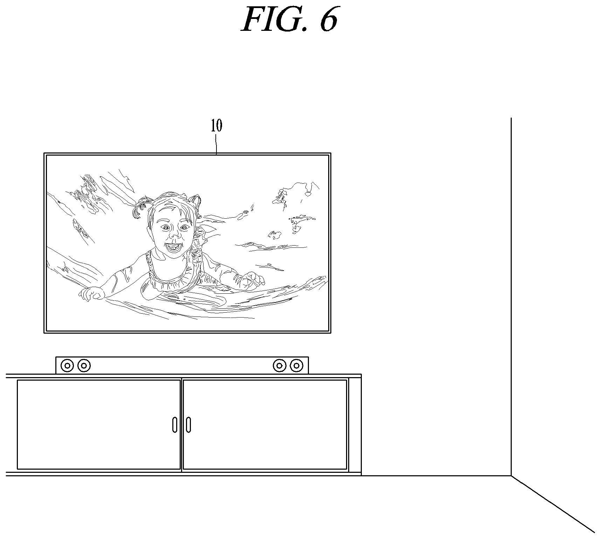

FIG. 6 illustrates an example of playing, on the TV platform 10, digital artwork purchased by a user through the NFT market system 1 according to an embodiment of the present disclosure.

FIG. 6 shows an example of the TV platform 10 according to an embodiment of the present disclosure, i.e., an example of outputting digital artwork (or preview artwork, hereinafter, collectively referred to as digital artwork) provided by the NFT market server 20 through the TV platform 10.

In this case, the digital artwork may be in a form of an image as shown in FIG. 6, or a video form. When the digital artwork is in a video form, the digital artwork may further include sound information. In this case, the TV platform 10 may not only output image information through the display unit 151, but also further output the sound information through the audio output unit 152.

Alternatively, the digital artwork may include only sound information, unlike the example shown in FIG. 6. In this case, the TV platform 10 may also output only sound information corresponding to the digital artwork through the audio output unit 152.

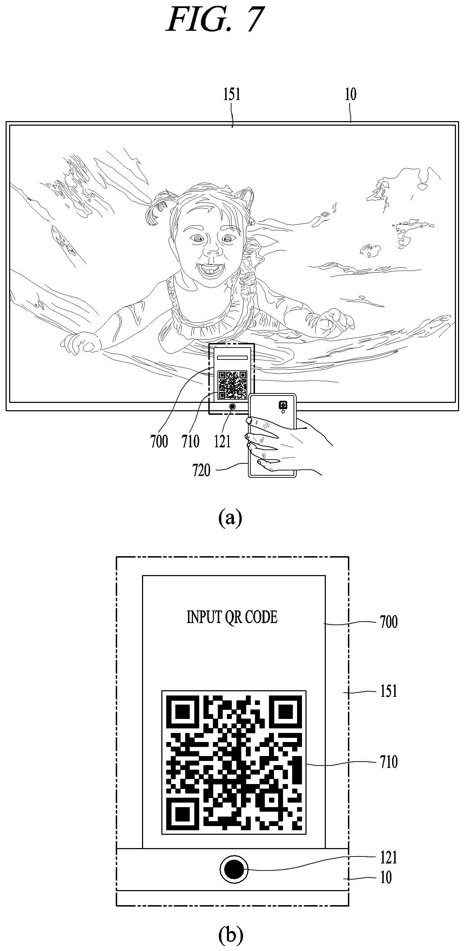

In the description above, the TV platform 10 according to an embodiment of the present disclosure allows a user to purchase digital artwork corresponding to preview artwork using a QR code. FIG. 7 illustrates an example of purchasing, by a user, digital artwork using a QR code through the TV platform 10 in the NFT market system 1 according to an embodiment of the present disclosure.

According to the above description, in the NFT market system 1 according to an embodiment of the present disclosure, when a user logs in to the NFT market server 20 through the TV platform 10, the user may inquire preview artwork provided by the NFT market server 20 and output the inquired preview artwork through the TV platform 10. To perform such a login, the NFT market server 20 may request a key (e.g., a private key) related to a cryptocurrency account of the user from the TV platform 10, and the user may access or log into the NFT market server 20, i.e., an NFT marketplace by using the key related to the cryptocurrency account as a login signature. In this case, the key related to the cryptocurrency account may be a key present in the TV platform 10 or stored in the cryptocurrency wallet 171 or 161 which is separately connected.

As such, when the login is completed, the NFT market server 20 may transmit at least one piece of preview artwork to the TV platform 10 according to a request by the user. Then, the TV platform 10 may output the at least one piece of preview artwork received from the NFT market server 20 as shown in (a) of FIG. 7.

In this case, when the user selects particular preview artwork (e.g., by inputting a particular key through a remote controller or a voice command), the user may purchase digital artwork corresponding to the selected particular preview artwork. In this case, in response to the selection of the particular preview artwork by the user, the NFT market server 20 may provide, to the TV platform 10, QR code input screen information to which the user may input a QR code as purchase information that allows the user to purchase the digital artwork.

Then, as shown in (a) of FIG. 7, a QR code input screen 700 transmitted from the NFT market server 20 may be displayed on the display unit 151 of the TV platform 10. In this case, the QR code input screen 700 may be displayed in a periphery of the camera 121 of the TV platform 10, the camera 121 allowing the user to input the QR code, so that when the user inputs the QR code, the input QR code may be immediately identified.

When the QR code input screen 700 is displayed on the display unit 151, the user may input a preset QR code of the user. For example, the preset QR code of the user may be input through a separate user device 720. In addition, the separate user device may be a mobile terminal 720 of the user.

In this case, as shown in (a) of FIG. 7, when the user outputs the QR code to the display unit of the mobile terminal 720 and projects the output QR code onto the camera 121 of the TV platform 10, an image sensor in the camera 121 may acquire image information including the QR code of the mobile terminal 720. Then, a QR code 720 may be extracted from the acquired image information and displayed on the QR code input screen 700 as shown in (b) of FIG. 7.

As shown in (a) and (b) of FIG. 7, when the QR code 720 is input, the TV platform 10 may identify whether the input QR code 720 is a QR code of an owner of a cryptocurrency-related key stored in a cryptocurrency wallet included therein or connected thereto, i.e., the user. Then, when the input QR code 720 is the QR code of the user, a purchase transaction for digital artwork corresponding to currently selected preview artwork may be generated, and the generated purchase transaction may be transmitted to the NFT market server 20. Here, when the purchase transaction is signed, the cryptocurrency-related key of the user may be used to verify a purchase request by a genuine user.

It has been described above that the NFT market server 20 according to an embodiment of the present disclosure may generate preview artwork for digital artwork to prevent illegal copying of the digital artwork. In addition, it has been also described that the NFT market server 20 may create preview artwork by limiting image quality or playback time.

Examples of a method of generating preview artwork may include a masking or watermarking method. Here, the masking is performed by synthesizing transparent image information with particular saturation or brightness into digital artwork to limit image quality or sharpness of the digital artwork, and may create digital artwork with limited saturation or brightness. Additionally, the watermarking may refer to a method of inserting a preset digital mark into digital artwork to indicate that the digital artwork is preview artwork.

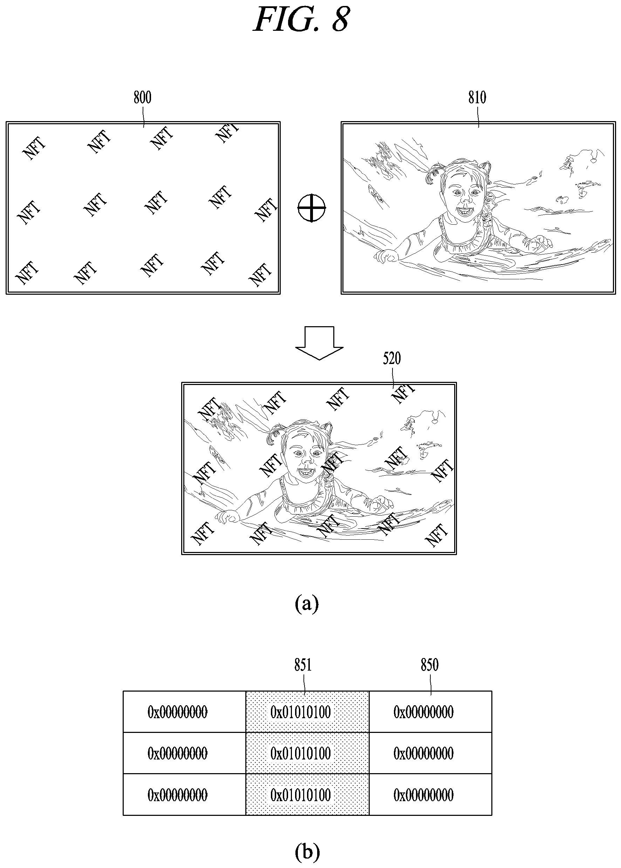

FIG. 8 illustrates an example of inserting a watermark into digital artwork to prevent illegal copying by a user according to the watermarking method, in the NFT market system 1 according to an embodiment of the present disclosure.

(a) of FIG. 8 shows an example of generating a preview image by synthesizing an image 800 (hereinafter, a watermark image) including a watermark with an image 810 of digital artwork. Here, the watermark image 800 may be an image in which watermarks are randomly arranged to have a same resolution as that of the image 810 of the digital artwork. Additionally, the watermark image 800 may have a preset difference from the image 810 of the digital artwork in terms of bits in RGB values. Desirably, the watermark image 800 may have an RGB value with a difference from that of the image 810 of the digital artwork by one bit to minimize a change in the images.

As an example, when the image 810 of the digital artwork is constituted by supplementing an alpha channel to an RGB color model, like the red-green-blue-alpha (RGBA) color model, a watermarking mask may be inserted into the alpha channel. That is, the watermarking mask may be inserted into the alpha channel among four channels (RGBA) in a screen of the digital artwork. Here, the watermark image may have an RGB value with a difference from that of the digital artwork by one bit to minimize a change in the images.

(b) of FIG. 8 shows an example of having inserted, into a portion 851, a watermark image having a difference in RGB values by one bit from image bits 850 of digital artwork when a watermarking mask of one bit is inserted as described above.

The watermark image 800 may be synthesized with the image 810 of the digital artwork as shown in (a) of FIG. 8. In this case, a bit operation may be performed on the watermark image 800 differently depending on contrasts in respective portions of the image 810 of the digital artwork.

As an example, in a case of an area of the image 810 of the digital artwork where a contrast is above a certain level, that is, in case of a bright area, the NFT market server 20 may insert a watermark image with a value one bit lower than that of the corresponding area in the image 810 of the digital artwork. Conversely, in a case of a dark area, the NFT market server 20 may insert a watermark image with a value one bit higher than that of the corresponding area in the image 810 of the digital artwork. Accordingly, the watermark may be displayed to be dark in a bright area and bright in a dark area in the image 810 of the digital artwork.

The description above is provided on an assumption that the present disclosure is applied only to a TV platform. However, the present disclosure may be applied to an image display platform including other devices, as well as a TV. As an example, the present disclosure may be applied to a platform that includes a computer monitor, a projector, a tablet, or the like as an image display device. Alternatively, the present disclosure may be also applied to a platform such as digital signage.

The present disclosure can be implemented as computer-readable codes on a medium having a program recorded thereon. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The above detailed description should not be limitedly construed in all aspects and should be considered as illustrative. The scope of the present disclosure should be determined by reasonable interpretation of the appended claims, and all changes within the scope of equivalents of the present disclosure are included in the scope of the present disclosure.

## Claims

1. A television (TV) platform comprising:
an output unit comprising a display unit and an audio output unit;
a communication unit configured to establish a communication connection with a non-fungible token (NFT) market server;
a memory comprising a cryptocurrency wallet containing at least one piece of key information related to a cryptocurrency account of a user; and
a control unit configured to: access the NFT market server by generating a login signature according to the at least one piece of key information stored in the cryptocurrency wallet according to a request by a user, receive data of pieces of preview artwork corresponding to at least one piece of digital artwork provided by the NFT market server, respectively, and output the pieces of preview artwork via the output unit to display the pieces of preview artwork; and
when the user selects one of the displayed pieces of preview artwork, generate a purchase transaction comprising a signature according to the at least one piece of key information stored in the cryptocurrency wallet, transmit the purchase transaction to the NFT market server, and receive NFT status information of digital artwork corresponding to the selected one piece of preview artwork and having transaction details updated based on the purchase transaction.

2. The TV platform of claim 1, wherein the control unit requests, from the NFT market server, an inquiry about pieces of digital artwork owned by the user by transmitting the purchase transaction comprising the signature according to the at least one piece of key information and, in response to the requesting of the inquiry, receives a list of pieces of digital artwork corresponding to an NFT in which the user is recorded as an owner of the pieces of digital artwork from the NFT market server.

3. The TV platform of claim 2, wherein the control unit receives, from the NFT market server, at least one piece of digital artwork corresponding to the received list of pieces of digital artwork, and sequentially outputs the received at least one piece of digital artwork through the output unit.

4. The TV platform of claim 3, further comprising an interface unit capable of being connected to an external module comprising a cryptocurrency wallet,
wherein the control unit reads the key information for the login signature and the transaction signature from the cryptocurrency wallet comprised in the external module.

5. The TV platform of claim 1, wherein, when the user selects one of the displayed pieces of preview artwork, the control unit requests, from the NFT market server, information of a purchase screen for purchasing digital artwork corresponding to the selected one piece of preview artwork and, in response to the requesting, displays a purchase screen for receiving an input of unique information of the user on one region of the display unit.

6. The TV platform of claim 5, wherein the control unit identifies whether the unique information of the user, the unique information being input to the purchase screen, corresponds to a user corresponding to the login signature, and when the user corresponding to the unique information is identical to the user corresponding to the login signature, generates the purchase transaction and transmits the generated purchase transaction to the NFT market server.

7. The TV platform of claim 6, further comprising a camera capable of obtaining an image in one direction of the TV platform through an image sensor,
wherein, when a user identified based on user unique information obtained by the camera is identical to the user corresponding to the login signature, the control unit generates the purchase transaction and transmits the generated purchase transaction to the NFT market server.

8. The TV platform of claim 7, wherein the user unique information is quick response (QR) information of a user displayed on a mobile terminal of the user.

9. The TV platform of claim 1, wherein the TV platform is a platform implemented as digital signage.

10. A non-fungible token (NFT) market server comprising:
a communication unit configured to establish a communication connection with at least one artist device, at least one television (TV) platform, and a plurality of terminals constituting a blockchain network;
an NFT issuing unit configured to issue an NFT in which ownership and transaction details of digital artwork received from the at least one artist device are specified;
a data block update unit configured to update a data block according to a blockchain method so that the data block according to the blockchain method comprises the issued NFT;
a memory configured to store a plurality of pieces of digital artwork received from a plurality of artist devices; and
a control unit configured to provide an NFT marketplace which is an e-commerce space in which transaction of digital artwork is performed, control the NFT issuing unit to, when a transaction comprising a signature generated by at least one key related to a cryptocurrency account of an artist and digital artwork are received, issue an NFT corresponding to the digital artwork based on the transaction, control the data block update unit so that a plurality of data blocks according to the blockchain method comprise the issued NFT, and register the digital artwork for which the NFT is issued in the NFT marketplace.

11. The NFT market server of claim 10, wherein the NFT market server further comprises a preview generation unit configured to generate preview artwork for each of the digital artwork received from the at least one artist device, and
the preview artwork is digital artwork of which at least one of image quality and playback time is limited, or digital artwork into which a preset mark or an image is further inserted to be distinguishable from original digital artwork.

12. The NFT market server of claim 11, wherein the control unit receives, from a connected TV platform, information about a resolution of an image which may be played on the connected TF platform, and generates the preview artwork based on the received image resolution information with respect to the connected TV platform.

13. The NFT market server of claim 11, wherein, based on a request from a connected TV platform, the control unit transmits at least one piece of preview artwork corresponding to at least one piece of digital artwork to the connected TV platform, and
when a purchase request for particular preview artwork is received from the connected TV platform according to a selection by a user of the connected TV platform, transmits information about a purchase screen capable of receiving an input of preset unique information of the user to the connected TV platform in response to the purchase request.

14. The NFT market server of claim 13, wherein, when a purchase transaction comprising signature information according to at least one key related to a cryptocurrency account of the user of the connected TV platform is received from the connected TV platform, the control unit performs transaction of digital artwork corresponding to the particular preview artwork according to the received purchase transaction, and
controls the data block update unit so that the plurality of data blocks according to the blockchain method further comprise transaction details according to the purchase transaction, when the transaction of the digital artwork is completed.

15. The NFT market server of claim 11, wherein the preview generation unit generates the preview artwork by inserting a watermarking mask into an image of the digital artwork, and
the watermarking mask is inserted into an alpha channel among channels in a screen of the digital artwork, and has a red-green-blue (RGB) value with a difference from an RGB value of the digital artwork by one bit.

16. The NFT market server of claim 15, wherein the preview generation unit inserts a watermarking mask with an RGB value which is one bit lower than or higher than an RGB value of the digital artwork into the alpha channel, depending on a contrast in each portion of the digital artwork.
